# EUROPÄISCHE PATENTANMELDUNG

(11) **EP 0 676 625 A2**
(43) Veröffentlichungstag der Anmeldung: **11.10.1995**
(21) Anmeldenummer: 95104893.3
(22) Anmeldetag: 01.04.1995
(51) Int. Cl.: G01F 23/72, G01F 23/76, G01F 23/64

(54) **Füllstandsmessvorrichtung**

(30) Priorität: 08.04.1994 DE 4412163
(71) Anmelder: Unimess Messtechnische Geräte GmbH, D-61239 Ober-Mörlen (DE)
(72) Erfinder: Urich, Manfred Dipl.-Ing., D-61250 Usingen (DE)
(74) Vertreter: Haar, Lucas Heinz Jörn, Dipl.-Ing.

(57) **Zusammenfassung**

Bei einer Vorrichtung zur Messung des Füllstands eines flüssigen Mediums in einem unter Druck setzbaren Raum mit einem durch einen Hohlkörper gebildeten Schwimmer (2), der in einem Rohr (1) in vertikaler Richtung beweglich geführt ist und dessen jeweilige vertikale Lage durch magnetische Mittel (3) erfaßt und angezeigt wird, ist der Hohlraum (9) des Schwimmers (2) mit der gasförmigen Atmosphäre über der Oberfläche des flüssigen Mediums durch ein Belüftungsrohr (10) verbunden, das sich vom Boden des Schwimmers (2) nach oben erstreckt. Hierdurch kann der Schwimmer (2) hohen Drücken standhalten.

## Beschreibung

Die Erfindung betrifft eine Vorrichtung zur Messung des Füllstands eines flüssigen Mediums in einem unter Druck setzbaren Raum mit einem durch einen Hohlkörper gebildeten Schwimmer, der in einer definierten Ausrichtung in vertikaler Richtung beweglich geführt ist und dessen jeweilige vertikale Lage durch mechanische, magnetische oder optische Mittel erfaßt wird.

Füllstandsmeßvorrichtungen der angegebenen Art werden zur Beobachtung des Flüssigkeitsniveaus in geschlossenen, unter Druck setzbaren Vorrichtungen wie Boilern, Autoklaven oder dergleichen benötigt. In solche Vorrichtungen können hohe Temperaturen und hohe Drücke herrschen und die Dichte des flüssigen Mediums kann vergleichsweise gering sein. Der Schwimmer der Meßvorrichtung muß daher in der Lage sein, hohen Druck- und Temperaturbeanspruchungen Stand zu halten und er muß sehr leicht gebaut sein, um auch bei geringer Dichte des flüssigen Mediums einen ausreichenden Auftrieb zu erzeugen.

Aus der EP 0 298 529 B1 ist eine Füllstandsmeßvorrichtung der angegebenen Art bekannt, bei der in einem rohrförmigen Körper mit vertikaler Achse, der endseitig geschlossen und oben und unten mit einem unter Druck setzbaren Behälter verbunden ist, sich ein Schwimmer befindet, der mit einem Magnetelement versehen ist, das derart ausgebildet ist, daß es mehrere Dreh-Magnetdipole ausrichtet, die parallel zu dem rohrförmigen Körper angeordnet sind. Bei dieser Vorrichtung ist der Schwimmer mit inneren Verstärkungsringen versehen und mittels eines verdampfenden Gemischs aus zumindest einem wasserlöslichen Gas und Helium unter Druck gesetzt, wobei der Dampfdruck des Gemisches sich in Abhängigkeit von der Temperatur ändert, um zumindest teilweise den Druck außerhalb des Schwimmers auszugleichen. Diese bekannte Vorrichtung ist aufwendig und erfordert eine Anpassung der Zusammensetzung des Gemischs an unterschiedliche Anwendungsfälle. Für hohe Drücke bei niedriger Temperatur ist der Schwimmer nicht brauchbar. Weiterhin erhöhen die Verstärkungsringe das Gewicht des Schwimmers.

Es ist weiterhin aus der DE-GM 82 28 173 eine Füllstandsanzeige für Hochdruckgefäße bekannt, bei der ein mit Hochdruck belastbarer Schwimmer die Form einer Hohlkugel hat und aus einem druckfesten Material geringer Dichte wie Glas, Quarzglas, Quarz oder Aluminiumoxid besteht. Bei dieser bekannten Bauweise wird das Gewicht des Schwimmers in starkem Maße von der Höhe der benötigten Druckfestigkeit bestimmt. Der Schwimmer ist daher bei sehr hohen Drücken für Medien geringer Dichte zu schwer. Weiterhin ist die Stoßempfindlichkeit der verwendeten Werkstoffe von Nachteil.

Aufgabe der Erfindung ist es, eine Füllstandsmeßvorrichtung der eingangs genannten Art zu schaffen, deren Schwimmer hohen Drücken und hohen Temperaturen widersteht und sich durch ein geringes Gewicht auszeichnet.

Die Aufgabe wird erfindungsgemäß dadurch gelöst, daß der Hohlraum des Schwimmers mit der gasförmigen Atmosphäre über der Oberfläche des flüssigen Mediums durch ein Belüftungsrohr verbunden ist, das sich vom Boden des Schwimmers nach oben erstreckt.

Bei der erfindungsgemäßen Vorrichtung gleicht sich der Druck im Hohlraum des Schwimmers über das Belüftungsrohr dem Druck in dem den Schwimmer umgebenden Raum jeweils vollständig an. Der Hohlkörper des Schwimmers ist daher selbst bei sehr niedrigen oder sehr hohen Drücken keinen nennenswerten Druckbeanspruchungen ausgesetzt und kann entsprechend leicht ausgeführt sein. Als Werkstoff zur Herstellung des Schwimmers können daher gegenüber hohen Temperaturen beständige und korrosionsfeste Stähle in Form von dünnwandigen Blechen verwendet werden, die sich leicht verarbeiten lassen und ein geringes Gewicht des Schwimmers ermöglichen. Durch die erfindungsgemäße Anordnung des Belüftungsrohrs wird weiterhin erreicht, daß sich in dem Hohlraum des Schwimmers kein Kondensat ansammeln kann. Schlägt sich bei Druck- oder Temperaturänderungen Kondensat in dem Hohlraum des Schwimmers nieder, so wird dieses durch das sich in dem Hohlraum des Schwimmers befindliche und bei Druckabsenkung ausdehnende Gas über das Belüftungsrohr wieder herausgedrückt. Es kann daher nicht in dem Hohlraum verbleiben und sich dort anreichern. Der Hohlraum des erfindungsgemäßen Schwimmers bleibt trotz der ständig offenen Verbindung frei von Flüssigkeit und dementsprechend auch unter ungünstigen Bedingungen mit Gas gefüllt. Der Auftrieb des Schwimmers bleibt daher uneingeschränkt erhalten.

Erfindungsgemäß kann weiterhin vorgesehen sein, daß das obere Ende des Belüftungsrohrs derart umgebogen ist, daß es mit seiner Öffnung nach unten zeigt. Herabfallende Flüssigkeitstropfen können dadurch nicht das Belüftungsrohr eindringen. Das Belüftungsrohr kann auf der Außenseite des Schwimmers angeordnet oder durch den Hohlraum des Schwimmers hindurch geführt sein und mit seinem oberen Ende aus dem Schwimmer herausragen. Letzteres ist von Vorteil, wenn der Schwimmer in einem zylindrischen Rohr angeordnet ist.

Für zahlreiche Anwendungsfälle ist es zweckmäßig, wenn in dem Hohlraum des Schwimmers Permanentmagnete angeordnet sind. Da der Hohlraum des Schwimmers mit der Atmosphäre in dem unter Druck setzbaren Raum in Verbindung steht, die korrosive Bestandteile enthalten kann, ist erfindungsgemäß vorgesehen, daß die in dem Hohlraum des Schwimmers angeordneten Permanentmagnete und gegebenenfalls ihre Trägerbauteile mit einem Korrosionsschutzmantel umhüllt sind. Der Korrosionsschutzmantel kann beispielsweise aus Glas bestehen. Weiterhin können zur Erzielung einer hohen Korrosionsbeständigkeit der Schwimmer und die den Schwimmer führenden Bauelemente aus Glas hergesellt sein.

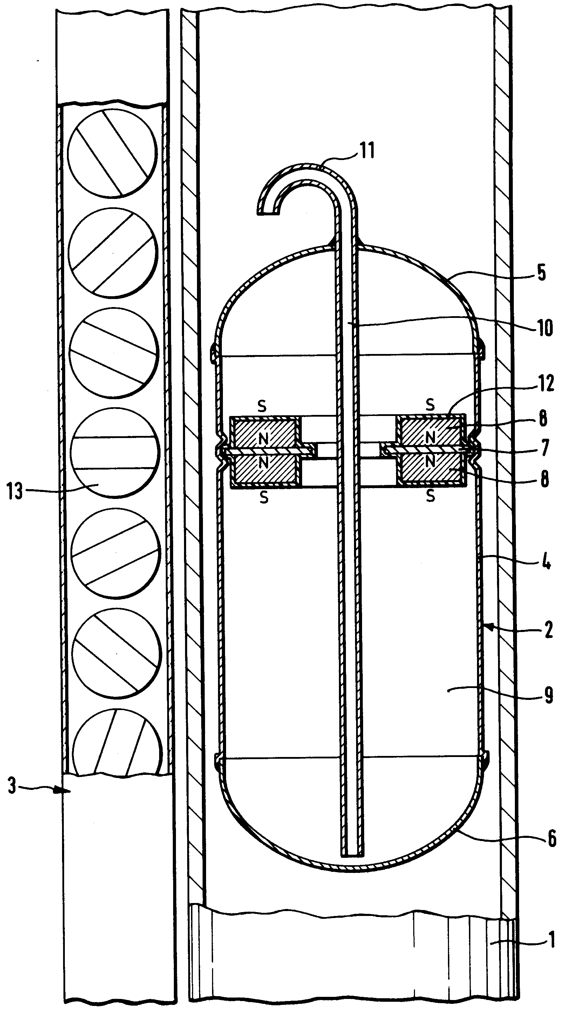

Die Erfindung wird nachfolgend anhand eines Ausführungsbeispiels näher erläutert, das in der Zeichnung dargestellt ist. Die Zeichnung zeigt im Längsschnitt eine Füllstandsmeßvorrichtung mit einem in einem vertikal ausgerichteten Rohr 1 angeordneten Schwimmer 2, dessen jeweilige Stellung magnetisch auf eine Anzeigevorrichtung 3 übertragen wird. Die nicht dargestellten Enden des Rohrs 1 können mit einem Druckbehälter, beispielsweise einem Boiler oder einem Autoklaven verbunden sein.

Der Schwimmer 2 besteht aus einem Hohlzylinder 4, dessen Enden mit gewölbten Kappen 5, 6 verschlossen sind. Die Kappen 5, 6 sind mit dem Hohlzylinder 4 durch eine Schweißnaht dicht verbunden. In dem Hohlzylinder 4 befindet sich eine ringförmige Trägerscheibe 7 aus Eisen, die durch in den Hohlzylinder 4 eingeformte Sicken gehalten ist. Auf beiden Seiten der Trägerscheibe 7 sind ringförmige Permanentmagnete 8 befestigt, deren Nordpole einander zugekehrt sind.

Die Trägerscheibe 7 und die Permanentmagnete 8 sind mit einem Korrosionsschutzmantel 12 umhüllt.

Koaxial zum Hohlzylinder 4 erstreckt sich durch den Hohlraum 9 des Schwimmers 2 ein Belüftungsrohr 10. Die untere Öffnung des Belüftungsrohrs 10 befindet sich in einem geringen Abstand von der Innenfläche der Kappe 6. Das obere Ende 11 des Belüftungsrohrs 10 ragt durch eine Öffnung in der Kappe 5 aus dem Hohlraum 9 heraus und ist in Form eines Halbkreises nach unten gebogen, so daß die obere Öffnung des Belüftungsrohrs 10 nach unten zeigt. Mittels einer Schweißnaht ist das Belüftungsrohr 10 in der Öffnung der Kappe 5 gasdicht befestigt.

Die Anzeigevorrichtung 3 ist parallel zu dem Rohr 1 angeordnet und weist eine Mehrzahl von kleinen Zylindern 13 auf, die um ihre horizontalen Achsen drehbar gelagert sind und mit Magneten versehen sind, deren Magnetpole auf quer zu den Drehachsen verlaufenden Achsen liegen. Die von dem Magnetfeld der Magnete 8 in dem Schwimmer 2 erfaßten Zylinder werden in ihrer Lage verändert. Mit Hilfe einer farbigen Markierung der Oberfläche der Zylinder wird deren veränderte Lage und damit die Position des Schwimmers 2 angezeigt.

Der dargestellte Schwimmer 2 eignet sich für höchste Drücke. Steigt beispielsweise der Druck in dem Rohr 1 an, führt dies auch zu einem Druckanstieg im Hohlraum 9 des Schwimmers 2, da über das Belüftungsrohr 10 unter höherem Druck stehendes Gas von außen in den Hohlraum 9 eindringt, und einen Druckausgleich hergestellt. Durch diese Angleichung des Innendrucks in dem Hohlraum 9 an den Druck in dem Rohr 1 wird die Entstehung einer den Schwimmer 2 belastenden Druckdifferenz weitgehend vermieden. Auch höchste Drücke in dem Rohr 1 können daher die Wirkungsweise des Schwimmers 2 nicht beeinträchtigen. Enthält das bei einem Druckanstieg in dem Rohr 1 in den Hohlraum 9 eindringende Gas Bestandteile, die beispielsweise bei Druck- oder Temperaturänderung innerhalb des Hohlraums 9 kondensieren, so kann dies die Wirkungsweise des Schwimmers 2 nicht beeinträchtigen. Das Kondensat sammelt sich zwangsläufig in der unteren Kappe 6 und wird bei einer Minderung des Drucks in dem Rohr 1 durch das dann zur Erzielung eines Druckausgleichs expandierende Gas, das sich in dem Hohlraum 9 befindet, durch das Belüftungsrohr 10 aus dem Hohlraum 9 herausgedrückt. Der beschriebene Schwimmer ist somit auch für Anwendungsfälle geeignet, bei denen es zur Kondensation von Bestandteilen der über dem Schwimmer befindlichen Gasatmosphäre kommen kann. Die beschriebene Meßvorrichtung kann zur Erreichung hoher Korrosionsbeständigkeit bis auf die Permanentmagnete aus Glas hergestellt sein. Ebenso kann die Anzeigevorrichtung 3 in einem Glasrohr untergebracht sein.

## Patentansprüche

1. Vorrichtung zur Messung des Füllstands eines flüssigen Mediums in einem unter Druck setzbaren Raum mit einem durch einen Hohlkörper gebildeten Schwimmer, der in einer definierten Ausrichtung in vertikaler Richtung beweglich geführt ist und dessen jeweilige vertikale Lage durch mechanische, magnetische oder optische Mittel erfaßt wird, **dadurch gekennzeichnet**, daß der Hohlraum (9) des Schwimmers (2) mit der gasförmigen Atmosphäre über der Oberfläche des flüssigen Mediums durch ein Belüftungsrohr (10) verbunden ist, das sich vom Boden des Schwimmers (2) nach oben erstreckt.

2. Vorrichtung nach Anspruch 1, dadurch gekennzeichnet, daß das obere Ende des Belüftungsrohrs (10) derart umgebogen ist, daß es mit seiner Öffnung nach unten zeigt.

3. Vorrichtung nach einem der Ansprüche 1 oder 2, dadurch gekennzeichnet, daß das Belüftungsrohr (10) auf der Außenseite des Schwimmers (2) angeordnet ist.

4. Vorrichtung nach einem der Ansprüche 1 oder 2, dadurch gekennzeichnet, daß das Belüftungsrohr (10) durch den Hohlraum (9) des Schwimmers (2) hindurch geführt ist und mit seinem oberen Ende aus dem Schwimmer (2) herausragt

5. Vorrichtung nach einem der vorhergehenden Ansprüche, dadurch gekennzeichnet, daß in dem Hohlraum (9) des Schwimmers (2) Permanentmagnete (8) angeordnet sind, die ggfs. zusammen mit ihren Trägerbauteilen mit einem Korrosionsschutzmantel (12) umhüllt sind.

6. Vorrichung nach Anspruch 5, dadurch gekennzeichnet, daß der Korrossionsschutzmantel (12) aus Glas besteht.

7. Vorrichtung nach einem der vorhergehenden Ansprüche, dadurch gekennzeichnet, daß der Schwimmer (2) und die Mittel (1) zu seiner Führung aus Glas bestehen.
